# EUROPÄISCHE PATENTANMELDUNG

(11) **EP 3 557 243 A1**
(43) Veröffentlichungstag der Anmeldung: **23.10.2019**
(21) Anmeldenummer: 18168019.0
(22) Anmeldetag: 18.04.2018
(51) Int. Cl.: G01N 29/04, G01N 29/07, G01N 29/11, G01N 29/22, G01N 29/34, B61K 9/10

(54) **VERFAHREN UND VORRICHTUNG ZUR ULTRASCHALLPRÜFUNG EINES SCHIENENABSCHNITTES**

(71) Anmelder: Siemens Aktiengesellschaft, 80333 München (DE)
(72) Erfinder: Die Erfindernennung liegt noch nicht vor

(57) **Zusammenfassung**

Es wird ein Verfahren zur Ultraschallprüfung eines Schienenabschnittes (100) vorgeschlagen, dass die folgenden Schritte umfasst:
- Einschallen von Ultraschall (101) mit einer Wellenlänge *λ* mittels eines Senders (1) entlang des Schienenabschnittes (100) ;
- Erfassen wenigstens eines Teils des eingeschallten Ultraschalls (101) mittels eines ersten und zweiten Empfängers (2, 4) ;
dadurch gekennzeichnet, dass die Empfänger (2, 4) entlang des Schienenabschnittes (100) in einem Abstand (42) von einem Viertel der Wellenlänge *λ* angeordnet werden.
Weiterhin betrifft die Erfindung eine Vorrichtung zur Ultraschallprüfung eines Schienenabschnittes (100).

## Beschreibung

Die Erfindung betrifft ein Verfahren gemäß dem Oberbegriff des Patentanspruches 1. Weiterhin betrifft die Erfindung eine Vorrichtung gemäß dem Oberbegriff des Patentanspruches 7.

Zur Überwachung oder Überprüfung von Gleissystemen, insbesondere von zugehörigen Schienen, können Wirbelstromprüfungen oder Ultraschallprüfungen verwendet werden.

Bei einer Ultraschallprüfung wird Ultraschall mittels eines stationären Senders von einer ersten räumlichen Position in den zu prüfenden Schienenabschnitt eingeschallt. Hierbei propagiert der eingeschallte Ultraschall entlang des Schienenabschnittes und wird durch diesen geführt. An einer zweiten räumlichen Position ist ein Empfänger am Schienenabschnitt angeordnet, der den eingeschallten Ultraschall erfasst. Das durch den Empfänger hierbei erfasste Amplitudenmesssignal ermöglicht ein Erkennen von Defekten, insbesondere von Rissen oder Einsenkungen (englisch: Squats), innerhalb des Schienenabschnittes. Entscheidend für eine kosteneffiziente Überprüfung des Schienenabschnittes ist insbesondere das Signal-zu-Rauschverhältnis.

Aus dem Stand der Technik sind eine Mehrzahl von Signalverarbeitungsverfahren zur Verbesserung des Signal-zu-Rauschverhältnisses bekannt, beispielsweise Lock-In-Verfahren oder codierte Pulssequenzen. Die genannten Verfahren ermöglichen zwar eine Erhöhung des Signal-zu-Rauschverhältnisses, berücksichtigen jedoch nicht die physikalische Ursache der Schallabsorption, die zum verschlechterten Signal-zu-Rauschverhältnis führt.

Eine der wesentlichen Ursachen der Schallabsorption ist die Reflexion oder Streuung des eingeschallten Ultraschalls an Materialübergängen (Unstetigkeiten), beispielsweise Schweißnähten, oder an den Verbindungen des Schienenabschnittes zum Gleisbett, beispielsweise Bodendrähte. Durch die genannten Reflexionen können sich stehende Wellen ausbilden, die die eigentliche propagierende Ultraschallwelle überlagern. Hieraus resultiert ein verringertes Signal-zu-Rauschverhältnis. Bekannte Verfahren zur Signalverarbeitung können zwar das Signal-zu-Rauschverhältnis verbessern, sie ändern jedoch nichts am erfassten Amplitudenmesssignal.

Bekannte Signalverarbeitungsverfahren versuchen den Einfluss von Rauschen zu mindern. Beispielsweise wird ein codiertes Verfahren oder eine Frequenzmodulation zur Reduzierung des Rauschens verwendet. Beim Vorliegen eines weißen Rauschens ist dies äquivalent zu einer schmalbandigen spektralen Filterung um die Modulationsfrequenz des Ultraschalls. Allerdings wird hierbei ebenfalls der physikalische Ursprung des Rauschens nicht berücksichtigt. Insbesondere werden stehende Wellen nicht berücksichtigt. Diese können jedoch das Signal-zu-Rauschverhältnis erheblich negativ beeinflussen.

Der vorliegenden Erfindung liegt die Aufgabe zugrunde, eine Ultraschallprüfung eines Schienenabschnittes zu verbessern.

Die Aufgabe wird durch ein Verfahren mit den Merkmalen des unabhängigen Patentanspruches 1 sowie durch eine Vorrichtung mit den Merkmalen des unabhängigen Patentanspruches 7 gelöst. In den abhängigen Patentansprüchen sind vorteilhafte Ausgestaltungen und Weiterbildungen der Erfindung angegeben.

Das erfindungsgemäße Verfahren zur Ultraschallprüfung eines Schienenabschnittes, umfasst wenigstens die folgenden Schritte:
- Einschallen von Ultraschall mit einer Wellenlängen λ mittels eines Senders entlang des Schienenabschnittes;
- Erfassen wenigstens eines Teils des eingeschallten Ultraschalls mittels eines ersten und zweiten Empfängers.

Das erfindungsgemäße Verfahren ist dadurch gekennzeichnet, dass die Empfänger entlang des Schienenabschnittes in einem Abstand von einem Viertel der Wellenlänge A angeordnet werden.

Hierbei bezeichnet λ die Wellenlänge des verwendeten Ultraschalls, beispielsweise eine Mittenwellenlänge eines Ultraschallpulses.

Ein Schienenabschnitt ist insbesondere ein Teilbereich oder ein Abschnitt einer Eisenbahnschiene.

Gemäß der vorliegenden Erfindung werden wenigstens zwei Empfänger zum Erfassen wenigstens eines Teils des eingeschallten Ultraschalls verwendet. Der Ultraschall wird hierbei mittels des Senders in den Schienenabschnitt eingeschallt und propagiert entlang des Schienenabschnittes. Mit anderen Worten wird der Ultraschall wenigstens teilweise durch den Schienenabschnitt geführt. Ein Kopplungsmittel, beispielsweise Wasser, kann zur Einkopplung und somit zum Einschallen des Ultraschalls vorgesehen sein. Weiterhin weist der Ultraschall im Wesentlichen die Wellenlänge λ auf. Weist der Schienenabschnitt einen Defekt auf, so bewirkt dieser eine Reflexion oder Streuung des eingeschallten Ultraschalls. Eine solche defektbasierte Reflexion oder Streuung kann mittels der durch die Empfänger erfassten Amplitudenmesssignale ermittelt werden.

Ein Kerngedanke der vorliegenden Erfindung ist, dass die Empfänger in einem Abstand von *λ*/4 angeordnet sind. Dadurch erfasst beispielsweise der zweite Empfänger, der bezüglich der Propagationsrichtung des eingeschallten Ultraschalls nach dem ersten Empfänger angeordnet ist, ein zum ersten Amplitudenmesssignal des ersten Empfänger um π/2 phasenverschobenes zweites Amplitudenmesssignal. Vorteilhafterweise kann dadurch im Wesentlichen die komplexe Amplitude des erfassten Ultraschalls ermittelt oder rekonstruiert werden.

Durch die erfindungsgemäße Anordnung der zwei Empfänger kann ebenfalls bei einer stehenden Welle (stehende Ultraschallwelle), die beispielsweise an der Position des ersten Empfängers einen Wellenknoten aufweist, mittels des zweiten Empfängers erfasst werden. Das ist deshalb der Fall, da dann an der Position des zweiten Empfängers aufgrund des erfindungsgemäßen Abtstandes der Empfänger von *λ*/4 die stehende Welle ein Maximum ihrer Amplitude aufweist. Dadurch wird vorteilhafterweise das Signal-zu-Rauschverhältnis deutlich erhöht. Insbesondere wird durch die vorliegende Erfindung die physikalische Ursache einer Reduktion des Signal-zu-Rauschverhältnisses, das heißt beispielsweise eine Ausbildung von stehenden Wellen, berücksichtigt.

Ein weiterer Vorteil der vorliegenden Erfindung ist, dass bekannte Signalverarbeitungsverfahren zur weiteren Verbesserung des Signal-zu-Rauschverhältnisses ebenfalls ergänzend verwendet werden können.

Die erfindungsgemäße Vorrichtung zur Ultraschallprüfung eines Schienenabschnittes umfasst wenigstens einen Sender zum Einschallen von Ultraschall wenigstens einer Wellenlänge *λ* und einen ersten und zweiten Empfänger zum Erfassen wenigstens eines Teils des eingeschallten Ultraschalls. Erfindungsgemäß weisen die Empfänger einen Abstand von einem Viertel der Wellenlänge *λ* zueinander auf.

Es ergeben sich zum erfindungsgemäßen Verfahren gleichartige und gleichwertige Vorteile der erfindungsgemäßen Vorrichtung.

Ein weiterer Vorteil der erfindungsgemäßen Vorrichtung ist, dass diese im Vergleich zu bekannten Vorrichtungen nur eine vergleichsweise geringfügig erhöhte bauliche Komplexität aufweist, jedoch ein deutlich verbessertes Signal-zu-Rauschverhältnis ermöglicht.

Gemäß einer vorteilhaften Ausgestaltung der Erfindung werden ein erstes Amplitudenmesssignale des ersten Empfängers und ein zweites Amplitudenmesssignal des zweiten Empfängers zu einem gemeinsamen Amplitudenmesssignal zusammengesetzt.

Vorteilhafterweise entspricht das gemeinsame Amplitudenmesssignal im Wesentlichen der komplexen Amplitude des erfassten Ultraschalls. Dadurch kann vorteilhafterweise im Wesentlichen die komplexe Amplitude des Ultraschalls rekonstruiert werden, sodass das Signal-zu-Rauschverhältnis weiter verbessert wird. Insbesondere sind bei einer laufenden Welle ihr Realteil und ihr Imaginärteil zueinander um π/2 phasenverschoben. Dadurch ist diese zirkular. Eine stehende Welle kann sich durch eine Überlagerung von wenigstens zwei solchen zirkular laufenden Wellen ausbilden, wodurch sich eine elliptische oder lineare Welle in der komplexen Ebene ausbildet. Würde man - wie im Stand der Technik - ausschließlich nur eine Komponente dieser elliptischen oder linearen Wellen erfassen, so könnte dies zu einem Amplitudenmesssignal von annähernd Null führen. Gemäß der vorliegenden Erfindung kann dies nicht auftreten, da in einem solchen Fall beispielsweise das zweite Amplitudenmesssignal ein Maximum aufweist.

In einer vorteilhaften Weiterbildung der Erfindung werden/ wird die Amplitude, die Frequenz und/oder die Wellenlänge des eingeschallten Ultraschalls verändert.

Dadurch wird vorteilhafterweise das Signal-zu-Rauschverhältnis weiter verbessert.

Gemäß einer vorteilhaften Ausgestaltung der Erfindung erfolgt eine wellenlängenspezifische Filterung der von den Empfängern erfassten Amplitudenmesssignale.

Dadurch werden die Amplitudenmesssignale vorteilhafterweise bezüglich ihrer Frequenz beziehungsweise Wellenlänge gefiltert, sodass eine auf die Wellenlänge *λ* des eingeschallten Ultraschalls abgestimmte Filterung erfolgt. Mit anderen Worten werden die Amplitudenmesssignale spektral gefiltert. Vorteilhaftweise wird dadurch das Signal-zu-Rauschverhältnis weiter verbessert.

In einer vorteilhaften Weiterbildung der Erfindung wird eine Mehrzahl von Ultraschallpulsen mittels des Senders eingeschallt.

Gemäß einer vorteilhaften Ausgestaltung der Erfindung erfolgt eine handgeführte Ultraschallprüfung des Schienenabschnittes.

Vorteilhafterweise kann dadurch eine schnelle und flexible Ultraschallprüfung des Schienenabschnittes erfolgen. Weiterhin ist das Ergebnis der Ultraschallprüfung unmittelbar durch einen Benutzer erkennbar, auswertbar und/oder interpretierbar. Falls erforderlich kann der Schienenabschnitt mehrfach geprüft werden.

Weitere Vorteile, Merkmale und Einzelheiten der Erfindung ergeben sich aus dem im Folgenden beschriebenen Ausführungsbeispielen sowie anhand der Zeichnungen. Dabei zeigen schematisiert:
- Figur 1: eine Vorrichtung zur Ultraschallprüfung eines Schienenabschnittes gemäß des Standes der Technik;
- Figur 2: eine Vorrichtung zur Ultraschallprüfung eines Schienenabschnittes gemäß einer Ausgestaltung der Erfindung; und
- Figur 3: ein Flussdiagram des erfindungsgemäßen Verfahrens.

Gleichartige, gleichwertige oder gleichwirkende Elemente können in einer der Figuren oder in den Figuren mit denselben Bezugszeichen versehen sein.

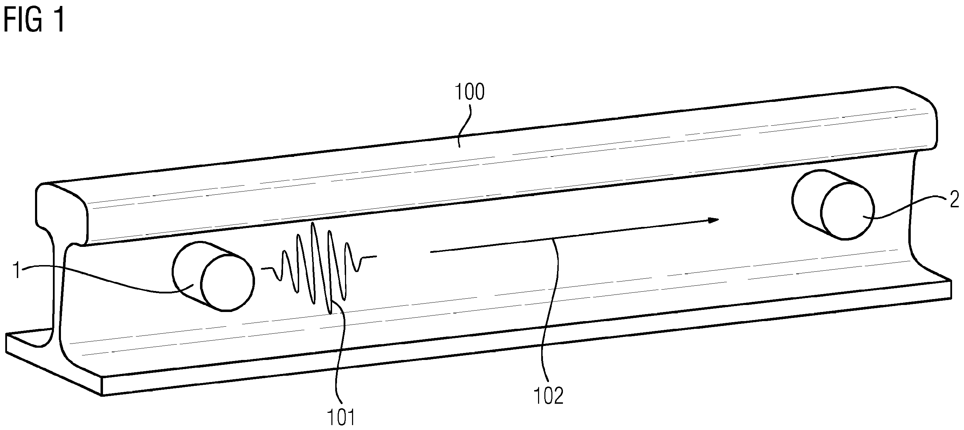

In Figur 1 ist eine aus dem Stand der Technik bekannte Vorrichtung zur Ultraschallprüfung eines Schienenabschnittes 100 dargestellt.

Die bekannte Vorrichtung weist einen Sender 1 und genau einen Empfänger 2 auf. Hierbei ist der Sender 1 zum Einschallen von Ultraschall 101 in den Schienenabschnitt 100 vorgesehen. In der Figur ist repräsentativ ein Ultraschallpuls oder Ultraschallwellenzug mit dem Bezugszeichen 101 gekennzeichnet. Der eingeschallte Ultraschall 101 propagiert entlang des Schienenabschnittes 100. Hierbei ist seine Propagationsrichtung symbolisch mit Bezugszeichen 102 gekennzeichnet. Mit anderen Worten propagiert der Ultraschall 101 entlang des Schienenabschnittes 100 von Sender 1 zum Empfänger 2.

Bildet sich zwischen Sender 1 und Empfänger 2 eine stehende Welle aus, so kann es vorkommen, dass der Empfänger 2 zufälligerweise im Bereich eines Wellenknotens dieser stehenden Welle angeordnet ist. Dadurch weist das vom Empfänger 2 erfasste Amplitudenmesssignal einen äußerst kleinen Wert im Bereich von Null auf. Mit anderen Worten wird ein stark reduziertes Amplitudenmesssignal durch den Empfänger 2 erfasst, dass zu einem niedrigen Signal-zu-Rauschverhältnis führt. Ein nachgelagertes Signalverarbeitungsverfahren basiert auf dem erfassten Amplitudenmesssignal, sodass sich das niedrige Signal-zu-Rauschverhältnis dort ebenfalls negativ niederschlägt.

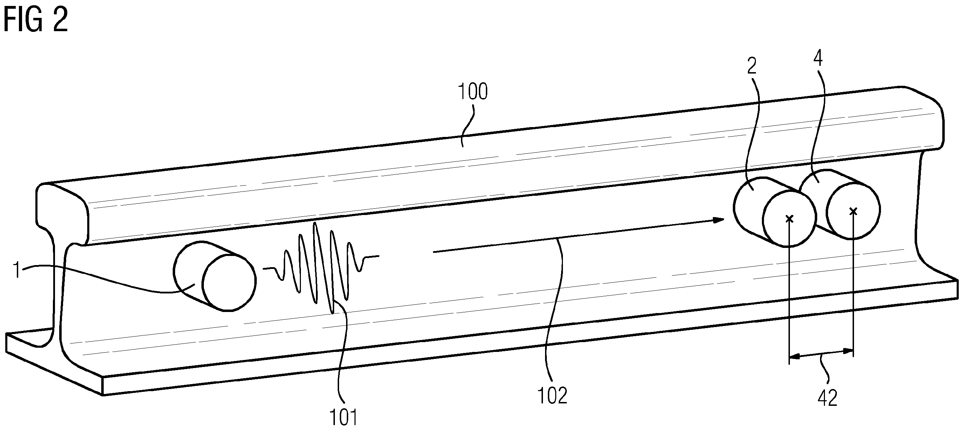

Die Figur 2 zeigt eine Vorrichtung zur Ultraschallprüfung eines Schienenabschnittes 100 gemäß einer Ausgestaltung der Erfindung.

Die Vorrichtung umfasst einen Sender 1 und einen ersten und zweiten Empfänger 2, 4, das heißt wenigstens zwei Empfänger 2, 4. Die Empfänger 2, 4 sind erfindungsgemäß in einem Abstand 42 von *λ*/4 zueinander angeordnet. Hierbei bezeichnet *λ* die Wellenlänge des mittels des Senders 1 eingeschallten Ultraschalls 101, beispielsweise eine Mittenwellenlänge.

Mittels des Senders 1 wird Ultraschall 101 in den Schienenabschnitt 100 eingeschallt. Der eingeschallte Ultraschall 101 propagiert entlang des Schienenabschnittes 100 vom Sender 1 zu den Empfängern 2, 4. Die Propagationsrichtung des eingeschallten Ultraschalls 101 ist durch den Pfeil mit dem Bezugszeichen 102 gekennzeichnet.

Aufgrund des erfindungsgemäßen Abstandes 42 von *λ*/4 der Empfänger 2, 4, weisen die durch die Empfänger 2, 4 erfassten Amplitudenmesssignale eine Phasenverschiebung von π/2 zueinander auf. Hierbei erfasst der erste Empfänger 2 ein erstes Amplitudenmesssignal und der zweite Empfänger 4 ein zweites Amplitudenmesssignal. Dadurch ist es möglich bei einer stehenden Welle dessen Amplitude im Wesentlichen vollständig zu Erfassen. Dadurch wird das Signal-zu-Rauschverhältnis im Vergleich zum Stand der Technik deutlich erhöht. Vorteilhafterweise wird bereits bei der Erfassung der Amplitudenmesssignale die physikalische Ursache einer möglichen Reduktion des Signal-zu-Rauschverhältnisse, beispielsweise der Wellenknoten der stehenden Welle, berücksichtigt.

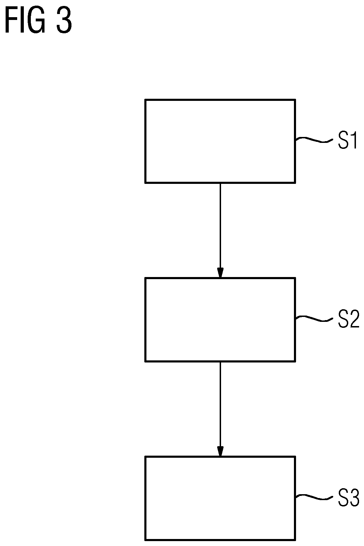

Die Figur 3 zeigt ein schematisches Flussdiagramm des erfindungsgemäßen Verfahrens.

In einem ersten Schritt S1 werden ein Sender 1 sowie ein erster Empfänger 2 und ein zweiter Empfänger 4 an einem Schienenabschnitt beziehungsweise relativ zu diesem angeordnet. Hierbei weisen die Empfänger 2, 4 erfindungsgemäß einen Abstand 42 von *λ*/4 zueinander auf, wobei *λ* die Wellenlänge des zur Ultraschallprüfung vorgesehenen Ultraschalls bezeichnet (siehe Schritt 2).

In einem zweiten Schritt S2 wird Ultraschall mit einer Wellenlänge *λ* mittels des Senders entlang des Schienenabschnittes eingeschallt.

In einem dritten Schritt S3 wird wenigstens ein Teil des eingeschallten Ultraschalls mittels des ersten und zweiten Empfängers 2, 4 erfasst. Mit anderen Worten erfasst der erste Empfänger 2 ein erstes Amplitudenmesssignal und der zweite Empfänger 4 ein zweites Amplitudenmesssignal, wobei die Amplitudenmesssignale aufgrund des erfindungsgemäßen Abstandes 42 des ersten und zweiten Empfängers 2, 4 eine Phasenverschiebung von π/2 aufweisen.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Sender
- 2: erster Empfänger
- 4: zweiter Empfänger
- 42: Abstand (lambda/4)
- 100: Schienenabschnitt
- 101: Ultraschallpuls
- 102: Propagationsrichtung
- S1: erster Schritt
- S2: zweiter Schritt
- S3: dritter Schritt

## Patentansprüche

1. Verfahren zur Ultraschallprüfung eines Schienenabschnittes (100), umfassend die Schritte:
- Einschallen von Ultraschall (101) mit einer Wellenlänge *λ* mittels eines Senders (1) entlang des Schienenabschnittes (100) ;
- Erfassen wenigstens eines Teils des eingeschallten Ultraschalls (101) mittels eines ersten und zweiten Empfängers (2, 4) ;
**dadurch gekennzeichnet, dass** die Empfänger (2, 4) entlang des Schienenabschnittes (100) in einem Abstand (42) von einem Viertel der Wellenlänge *λ* angeordnet werden.

2. Verfahren gemäß Anspruch 1, bei dem ein erstes Amplitudenmesssignale des ersten Empfängers (2) und ein zweites Amplitudenmesssignal des zweiten Empfängers (4) zu einem gemeinsamen Amplitudenmesssignal zusammengesetzt werden.

3. Verfahren gemäß Anspruch 1 oder 2, bei dem die Amplitude, die Frequenz und/oder die Wellenlänge *λ* des eingeschallten Ultraschalls (101) verändert werden/wird.

4. Verfahren gemäß einem der vorhergehenden Ansprüche, bei dem eine wellenlängenspezifische Filterung der von den Empfängern (2, 4) erfassten Amplitudenmesssignale erfolgt.

5. Verfahren gemäß einem der vorhergehenden Ansprüche, bei dem eine Mehrzahl von Ultraschallpulsen (101) mittels des Senders (1) eingeschallt wird.

6. Verfahren gemäß einem der vorhergehenden Ansprüche, bei dem eine handgeführte Ultraschallprüfung des Schienenabschnittes (100) erfolgt.

7. Vorrichtung zur Ultraschallprüfung eines Schienenabschnittes (100), mit wenigstens einem Sender (1) zum Einschallen von Ultraschall (101) wenigstens einer Wellenlänge *λ* und einem ersten und zweiten Empfänger (2, 4) zum Erfassen wenigstens eines Teils des eingeschallten Ultraschalls (101), **dadurch gekennzeichnet, dass** die Empfänger (2, 4) einen Abstand (42) von einem Viertel der Wellenlänge *λ* zueinander aufweisen.
